# EUROPÄISCHE PATENTANMELDUNG

(11) **EP 3 922 378 A1**
(43) Veröffentlichungstag der Anmeldung: **15.12.2021**
(21) Anmeldenummer: 20179440.1
(22) Anmeldetag: 11.06.2020
(51) Int. Cl.: B22D 11/16, G01S 13/88

(54) **VERFAHREN UND VORRICHTUNG ZUM BERÜHRUNGSLOSEN BESTIMMEN VON ZUMINDEST EINER EIGENSCHAFT EINES ZUMINDEST TEILWEISE AUFGESCHMOLZENEN ENDLOSSTRANGES**

(71) Anmelder: Mecorad GmbH, 51105 Köln (DE)
(72) Erfinder: Heutz, Andreas, 53332 Bornheim (DE); Ünlüer, Cagdas, 45127 Essen (DE); Banaszak, Marc, 40211 Düsseldorf (DE)
(74) Vertreter: Gruner, Leopold Joachim

(57) **Zusammenfassung**

Die vorliegende Erfindung betrifft ein Verfahren zum berührungslosen Bestimmen von zumindest einer Eigenschaft eines zumindest teilweise aufgeschmolzenen quasi-endlosen Stranges während eines Gießvorganges des quasi-endlosen Stranges, welcher in einer Kühlzone abkühlt, wobei eine sukzessive Aushärtung des quasi-endlosen Stranges ermöglicht wird, umfassend zumindest die folgenden Schritte: Emittieren eines ersten Signales, insbesondere ersten Radarsignals, in der Form von Strahlung durch eine Emissionsvorrichtung, insbesondere einer Radar-Emissionsvorrichtung, Erzeugen eines zweiten Signales, insbesondere zweiten Radarsignals, zumindest teilweise durch ein Wechselwirken des ersten Signales mit einem Bereich des quasi-endlosen Stranges, Empfangen des zweiten Signales durch eine Empfangsvorrichtung, insbesondere durch eine Empfangsvorrichtung für Radarsignale, Bestimmen mindestens einer Eigenschaft des quasi-endlosen Stranges auf Basis des zweiten Signals, wobei mindestens der Schritt des Wechselwirkens in der Kühlzone erfolgt. Die vorliegende Erfindung betrifft zudem eine Vorrichtung zum Gießen eines Materials, insbesondere eines Metalls, zu einem quasi-endlosen Strang im Rahmen eines Stranggussverfahrens und zum berührungslosen Bestimmen von zumindest einer Eigenschaft des zumindest teilweise aufgeschmolzenen quasi-endlosen Stranges während des Gießens des quasi-endlosen Stranges, umfassend eine Kokille, welche dazu geeignet ist, den quasi-endlosen Strang zu formen, eine Kühlzone, in welcher der quasi-endlose Strang abkühlt, wobei eine sukzessive Aushärtung des quasi-endlosen Stranges ermöglicht wird, eine Emissionsvorrichtung, insbesondere einen Radarsender, welche dazu eingerichtet ist, ein erstes Signal in der Form von Strahlung zu emittieren, insbesondere als erstes Radarsignal, eine Empfangsvorrichtung, insbesondere einen Radarempfänger, welche dazu eingerichtet ist, ein zweites Signal zu empfangen, inbesondere ein zweites Radarsignal wobei das zweite Signal zumindest teilweise durch ein Wechselwirken des ersten Signales mit einem Bereich des quasi-endlosen Stranges in der Kühlzone erzeugt wird, eine Datenverarbeitungseinheit, welche dazu eingerichtet ist, mindestens eine Eigenschaft des quasi-endlosen Stranges auf Basis des zweiten Signals zu bestimmen. Erfindungsgemäß ist zudem eine entsprechende Verwendung vorgehen.

## Beschreibung

### Technisches Gebiet

Die vorliegende Erfindung betrifft ein Verfahren zum berührungslosen Bestimmen von zumindest einer Eigenschaft eines zumindest teilweise aufgeschmolzenen quasi-endlosen Stranges während eines Gießvorganges des quasi-endlosen Stranges, welcher in einer Kühlzone abkühlt.

### Stand der Technik

Das Gießen von Metallen und Legierungen ist ein Fertigungsverfahren, bei dem individuell geformte Werkstücke (Gussstücke) aus flüssigem Metall - der Metallschmelze (bspw. Stahlschmelze) - hergestellt werden. Es gibt zahlreiche verschiedene Gießverfahren, die nach mehreren Kriterien eingeteilt werden können.

Das Gießen in Formen, die der Form des Fertigteils weitgehend entsprechen, ist das Formgießen, das am häufigsten eingesetzt wird. Daneben gibt es noch das Vergießen zu theoretisch endlosen Strängen, dem Strangguss.

Als Stranggießen oder Strangguss wird hierbei ein Endlosverfahren bezeichnet, dass sowohl zur diskontinuierlichen als auch kontinuierlichen Herstellung von Stranggussprodukten (z.B. (Walz-)Barren und Pressbolzen, auch Ronden genannt), aus Eisen- und Nichteisenlegierungen eingesetzt wird. Im Stahlwerk ist zudem die Bezeichnung (Walz-)Bramme gebräuchlich.

Die Technik des Stranggießens unterscheidet sich nur wenig, ob nun Stähle, Kupferlegierungen oder Aluminium verarbeitet werden. Der wesentliche Unterschied liegt bei den Temperaturen, die von ca. 700°C bei reinem oder legiertem Aluminium bis 1.400°C bzw. 1.550°C bei Stahl reichen.

Entsprechend der Kokillenanordnung wird zwischen horizontalem und vertikalem Stranggießen unterschieden, wobei ersteres speziell bei Kupferlegierungen und kleinformatigen Strängen angewandt wird.

In einer Stranggießanlage sinkt die Temperatur des erhaltenen Gießstranges beim Erstarren an jeder Querschnittsposition des Gießstranges während der Herstellung von der analysenabhängig ca. 1.550°C betragenden Gießtemperatur bis unter 900°C, teilweise bis unter 700°C ab. Die Duktilität des eingesetzten Stahlwerkstoffes, die ein Bewertungskriterium für die Schwächung des Werkstoffes darstellt, weist in diesem Temperaturintervall lokale Minima auf. Bei der Durchführung des Gießprozesses wird daher auf die Temperaturführung besonderen Wert gelegt und diese so ausgewählt und eingestellt, dass in den risskritischen Biege- und Richtbereichen einer Stranggießanlage bei der Herstellung des Gießstranges die Duktilität hoch genug ist, um Risse zu vermeiden.

Beim Strangguss von Brammen (Walzbarren und Pressbolzen aus Stahl) wird der flüssige Stahl in Kupferkokillen gegossen, welche nach unten offen und wassergekühlt sind. Durch diese Öffnung tritt der Stahl in erstarrter Form aus und wird kontinuierlich über Führungs- und Triebwalzen als Endlosstrang abgezogen. Auf dem Weg von der senkrechten in die über 15 Meter tiefer gelegene horizontale Lage kühlt der Stahlstrang auch im Inneren ab. Er wird hierzu kontinuierlich mit Wasser besprüht und besitzt aufgrund der raschen Abkühlung ein relativ zähes und festes Gefüge.

Stranggussprodukte werden auch als Halbzeug benannt, weil sie sich bis zum Endprodukt noch weiteren Bearbeitungsgängen unterziehen müssen. Walzen, Pressen und Tiefziehen kommen mehrheitlich zur Anwendung, verbunden mit einer vorausgehenden zeitlich terminierten Auslagerung bei Raum- bzw. Umgebungstemperatur, oder einer vor - bzw. nachgeschalteten thermischen Behandlung (Anlassen und Auslagern).

Diverse Verfahren zur Bestimmung von Eigenschaften, insbesondere Störungen während des Gießbetriebes sind aus dem Stand der Technik bekannt.

Zum Bestimmen von Eigenschaften werden insbesondere radiometrische Messsysteme, Ultraschallmesssysteme, Radarmesssysteme, optische Messsysteme (Laser, Kamera) und/oder Kraftmesssysteme eingesetzt. In einigen Situationen in der Stahlindustrie werden Röntgen- oder Isotopenlösungen für eine genaue Messung verwendet. Allerdings emittieren diese Technologien Strahlung und sind in der Wartung aufwendig.

Ultraschallmesssysteme und optische Messsysteme haben den Nachteil, dass schwierige Bedingungen in der Stahlindustrie, wie z.B. Wärmestrahlung, verdampftes Wasser aus der Kühlung und Staub die Messung mit Sensoren in vielen Positionen behindern, wo es vorteilhaft wäre geometrische Informationen über die Produktionsgüter zu erhalten. Ein Vergleich der Sensortechnologien zeigt, dass Ultraschall- oder optische Sensoren (Laser, Kamera) durch die Medien in der Atmosphäre eines Stahlwerks sehr negativ beeinflusst werden. Somit ist keines der vorgenannten Messsysteme in der Lage, mit all diesen störenden Faktoren gleichzeitig fertig zu werden und gleichzeitig die hochpräzisen Werte einer Laborsituation zu reproduzieren.

Radar kann durch all diese Zonen messen. Trotz der Tatsache, dass die Radartechnologie auf den ersten Blick in einer Laborsituation weniger genau zu sein scheint als ein Laser in einem Labor, behält das Radar seine Präzision in der realen Atmosphäre eines Stahlwerks. Radarsensoren senden allgemein eine elektromagnetische Welle aus, die auf einer Technologie basiert, die einem Mobiltelefon ähnelt. Die Strahlung ist 1000-mal geringer als die eines normalen Mobiltelefons.

Aus der DE 10 2018 108 696 A1 ist beispielsweise ein optisches Messverfahren zum berührungslosen Bestimmen der Abmessung einer bewegten Materialbahn zu entnehmen.

### Aufgabe

Der vorliegenden Erfindung liegt daher die technische Aufgabe zugrunde, ein Verfahren zur sicheren Detektion von Störungen während des Gießbetriebes, insbesondere nach Ausgang von einer Kokille bereitzustellen, welche besonders präzise ist, Ressourcen schont und mannigfaltige Möglichkeiten für sukzessive Fehlerkorrekturen ermöglicht.

Zudem ist es Aufgabe der vorliegenden Erfindung, soweit wie möglich auf zusätzliche Sensorik zu verzichten, um den Wartungs- und Instandhaltungsaufwand so gering wie möglich zu halten.

Bei dem Endlosstrang kann es sich beispielsweise um eine Bahn aus Metall, zum Beispiel in Form einer Metallfolie, aus Papier, aus Kunststoff, aus einem lichtundurchlässigen Gewebe, aus einem Verbundwerkstoff oder aus einem mehrschichtigen Material handeln.

Die Materialbahn ist im Verhältnis zu ihrer Länge und Breite vorzugsweise flach ausgebildet und weist eine im Vergleich zu ihrer Breite große Länge auf. Bei der zu bestimmenden Abmessung der Materialbahn handelt es sich dann vorzugsweise um eine Breite.

Bevorzugt handelt es sich bei dem zumindest teilweise aufgeschmolzenen Endlosstrang um einen teilweise aufgeschmolzenen Metallendlosstrang (d.h. um eine Bahn aus Metall).

Ein Quasiendlosstrang oder quasi-endloser Strang ist ein langer, kontinuierlicher Strang. Dabei kann ein quasi-endloser Strang in tatsächlicher Hinsicht durchaus ein Ende haben, der quasi-endlose Strang ist also nur quasi endlos. Gemeint ist lediglich, dass das Verfahren beispielsweise derart geartet ist, dass es einen kontinuierlichen Betrieb und eine kontinuierliche Strangerzeugung zulässt. Der quasi-endlose Strang kann also tatsächlich irgendwo bzw. irgendwann endlich sein. In einem Beispiel ist eine Kokille, von der ausgehend ein quasi-endloser Strang erzeugt wird, zu einem Zeitpunkt leer. Der quasi-endlose Strang würde nun bei der weiteren Verfahrensdurchführung ein Ende bekommen, es sei denn, die Kokille würde mit weiterem Material befüllt, d.h. nachgefüllt, um weiteres Rohmaterial für eine kontinuierlich fortgeführte Strangerzeugung bereitzustellen.

Ein Beispiel für einen Metallendlosstrang ist Brammenherstellung, insbesondere während des Stranggussverfahrens.

Je nach Form der Kokille können auch andere Querschnitte hergestellt werden. Bei quadratischen oder kreisförmigen Querschnitten spricht man hingegen nicht mehr von Brammen sondern von sogenannten **Knüppeln,** bei denen in einer Stranggießanlage flüssiges Metall als Bramme aus einer Kokille (K) vertikal nach unten in eine Förderrichtung ausgebracht wird, entlang einer Strangführung (S) geführt und in die Horizontale umgelenkt wird.

Es gibt vertikale und horizontale Stranggussverfahren. Bei einem Vertikalverfahren gibt es häufig verschiedene Zonen (Biegezone, Kreiszone, Richtzone), in welchen der vertikale Strang eine Kurve durchläuft, sodass er zum Prozessende ebenfalls in einen Horizontalstrang überführt wird.

In einer ersten Kühlzone erfolgt häufig eine Intensivkühlung der Bramme dergestalt, dass in der oberflächennahen Randzone der Bramme eine Gefügeumwandlung von Austenit in Ferrit erfolgt.

Ein Grundgedanke der Erfindung ist, die Bandkantenlage bzw. die Bandbreite metallischer Bänder mit zwei oder mehreren Radarsensoren, vorzugsweise Hochfrequenzsensoren im Bereich 30 bis 300 GHz vom Typ FMCW: Frequency Modulated Continuous Wave, zu ermitteln.

### Diskussion der Erfindung und möglicher Ausführungsformen

Bei der vorliegenden Erfindung handelt es sich um eine Erfindung auf dem technischen Gebiete der RADAR-Technik. RADAR bedeutet "RAdio Detection And Ranging". Frei übersetzt bedeutet dies ungefähr "funkgestützte Ortung und Abstandsmessung".

Die Erfindung kann vor allem vorteilhaft in Zusammenhang mit dem Gebiete der Gusstechnik eingesetzt werden.

Wenngleich die etablierte Wortwahl eine Einschränkung auf Radiofrequenzen suggeriert, ist dies für die vorliegende Erfindung nicht unbedingt erforderlich und es können auch elektromagnetische Wellen sämtlicher anderer Frequenzen (u.a. auch optische) zum Einsatz kommen oder andere physikalische Wellenphänomene wie Schall und Ultraschall.

In einem vorhergehenden Teil wurden einschlägige Probleme des Standes der Technik auf dem Gebiete der RADAR-Technik beschrieben.

Die Probleme des Standes der Technik werden erfindungsgemäß gelöst durch das Verfahren nach Anspruch 1. Bevorzugte Ausführungsformen und Weiterbildungen werden durch die Unteransprüche definiert.

Demgemäß ist ein Verfahren zum berührungslosen Bestimmen von zumindest einer Eigenschaft eines zumindest teilweise aufgeschmolzenen quasi-endlosen Stranges während eines Gießvorganges des quasi-endlosen Stranges vorgesehen, welcher in einer Kühlzone (K) abkühlt, wobei eine sukzessive Aushärtung des quasi-endlosen Stranges ermöglicht wird, umfassend zumindest die folgenden Schritte: Emittieren eines ersten Signales, insbesondere ersten RADAR-Signals, in der Form von Strahlung durch eine Emissionsvorrichtung, insbesondere einer RADAR-Emissionsvorrichtung, Erzeugen eines zweiten Signales, insbesondere zweiten Radarsignals, zumindest teilweise durch ein Wechselwirken (S02b) des ersten Signales mit einem Bereich des quasi-endlosen Stranges, Empfangen des zweiten Signales durch eine Empfangsvorrichtung, insbesondere durch eine Empfangsvorrichtung für Radarsignale, Bestimmen mindestens einer Eigenschaft des quasi-endlosen Stranges auf Basis des zweiten Signals, dadurch gekennzeichnet, dass mindestens der Schritt des Wechselwirkens in der Kühlzone erfolgt.

Die Erfindung schafft zudem eine Vorrichtung gemäß Anspruch 18. Demgemäß ist eine Vorrichtung zum Gießen eines Materials, insbesondere eines Metalls, zu einem quasi-endlosen Strang im Rahmen eines Stranggussverfahrens und zum berührungslosen Bestimmen von zumindest einer Eigenschaft des zumindest teilweise aufgeschmolzenen quasi-endlosen Stranges während des Gießens des quasi-endlosen Stranges vorgesehen, umfassend: eine Kokille, welche dazu geeignet ist, den quasi-endlosen Strang zu formen, eine Kühlzone, in welcher der quasi-endlose Strang abkühlt, wobei eine sukzessive Aushärtung des quasi-endlosen Stranges ermöglicht wird, eine Emissionsvorrichtung, insbesondere einen Radarsender, welche dazu eingerichtet ist, ein erstes Signal in der Form von Strahlung zu emittieren, insbesondere als erstes Radarsignal, eine Empfangsvorrichtung, insbesondere einen Radarempfänger, welche dazu eingerichtet ist, ein zweites Signal zu empfangen, inbesondere ein zweites Radarsignal, wobei das zweite Signal zumindest teilweise durch ein Wechselwirken des ersten Signales mit einem Bereich des quasi-endlosen Stranges in der Kühlzone erzeugt wird, sowie eine Datenverarbeitungseinheit, welche dazu eingerichtet ist, mindestens eine Eigenschaft des quasi-endlosen Stranges auf Basis des zweiten Signals zu bestimmen.

Die Erfindung schafft zudem eine Verwendung einer Emissionsvorrichtung und einer Empfangsvorrichtung gemäß Anspruch 19. Demgemäß ist eine Verwendung einer Emissionsvorrichtung und einer Empfangsvorrichtung, insbesondere für Radarsignale, zum berührungslosen Bestimmen von zumindest einer Eigenschaft eines zumindest teilweise aufgeschmolzenen quasi-endlosen Stranges während eines Gießvorganges des quasi-endlosen Stranges, welcher in einer Kühlzone abkühlt, vorgesehen, wobei eine sukzessive Aushärtung des quasi-endlosen Stranges ermöglicht wird,
wobei die Emissionsvorrichtung und die Empfangsvorrichtung derart angeordnet sind, dass sie die zumindest eine Eigenschaft des quasi-endlosen Stranges in der Kühlzone bestimmen.

Die bevorzugten Ausführungsformen und Weiterbildungen des Hauptanspruches lassen sich ebenso - einzeln oder in Kombination - mit den Nebenordnungen kombinieren.

Die Erfindung hat insbesondere den Vorteil, dass bereits in der Kühlzone gemessen wird. Da der Schritt des Wechselwirkens in der Kühlzone stattfindet, bezieht sich die bestimmte mindestens eine Eigenschaft auf den quasi-endlosen Strang in der Kühlzone. Diese Informationen über den quasi-endlosen Strang in der Kühlzone sind sehr wertvoll, da der Stranggussprozess zum Messzeitpunkt noch nicht sehr weit fortgeschritten ist. Die Messung erfolgt also im Hinblick auf den laufenden Stranggussprozess sehr frühzeitig.

So kann Material eingespart werden. Beispielsweise kann ein fehlerhafter Prozess frühzeitig erkannt und frühzeitig abgebrochen werden, wodurch Ressourcen eingespart werden. In einem weiteren Beispiel kann ein so erkannter Fehler effektiv korrigiert werden, da das fehlerhafte Material des quasi-endlosen Stranges noch nicht in den vollständig abgekühlten, festen Aggregatzustand überführt wurde. Da das Material beispielsweise noch besser formbar ist und eventuelle Parameter des Abkühlvorganges noch angepasst werden können, ergeben sich vorteilhafte Korrektur- und Weiterverarbeitungsmöglichkeiten.

Die Messung in der Kühlzone ist allgemein schwieriger zu realisieren bzw. kann ungenauer sein, da die physikalische Umgebung in der Kühlzone mit den Messverfahren interagiert bzw. diese stört. Insbesondere haben sich hier Messungen mit elektromagnetischen Wellen des Radiospektrums oder diesem Spektrum angrenzende Bereiche als besonders robust erwiesen, sodass sie hierdurch ein besonders robustes und belastbares Verfahren bereitstellen. Trotz der Tatsache, dass die Radartechnologie auf den ersten Blick in einer Laborsituation weniger genau zu sein scheint als ein Laser in einem Labor, behält das Radar seine Präzision in der realen Atmosphäre eines Stahlwerks, insbesondere auch, wenn im Bereich der Kühlzone am Strang gemessen wird oder gar die Messapparaturen im Bereich der Kühlzone, in welcher der Strang immer noch eine sehr hohe Temperatur aufweist, angeordnet sind.

Wie zudem der Fachmann der Regelungstechnik erkennt, ergeben sich zahlreiche Möglichkeiten, die Erfindung mit geeigneten Regelkreisläufen zu kombinieren.

### Bevorzugte Ausführungsformen

Gemäß einer Weiterbildung umfasst das Verfahren ferner einen Schritt eines Handlings eines Fehlers oder einer Anomalität im quasi-endlosen Strang, welcher auf Basis der bestimmten Eigenschaften oder hieraus ermittelter Sekundärgrößen festgestellt wird, insbesondere durch einen Abbruch des Gießverfahrens oder eine Erzeugung eines Protokolls oder einer Anweisung, welche dazu geeignet ist, den vom Fehler betroffenen Bereich des quasi-endlosen Stranges nachträglich bei der weiteren Verarbeitung zu entfernen, weiterhin insbesondere durch Herausschneiden des vom Fehler betroffenen Bereichs bei einem sukzessiven Zerteilen des quasi-endlosen Stranges in Brammen.

Gemäß einer Weiterbildung ist dabei zumindest eine bestimmte Eigenschaft des quasi-endlosen Stranges ausgewählt aus der Gruppe bestehend aus Abstand, Breite, Dicke, Dichte, Temperatur und Homogenität. Dadurch können verschiedene technisch relevante Eigenschaften effizient und frühzeitig ermittelt werden. Insbesondere kann ein Abstand gemessen werden. Beispielsweise ist ein bestimmter Abstand nützlich für die Einhaltung eines Sollabstandes, oder als Input für die Berechnung weiterer Größen wie beispielsweise der Breite des quasi-endlosen Stranges.

Gemäß einer Weiterbildung werden die Schritte S01 bis S03 von zwei unterschiedlichen Standpunkten, insbesondere von zwei im Wesentlichen gegenüberliegend angeordneten Standorten in Bezug auf den quasi-endlosen Strang durchgeführt.

Gemäß einer Weiterbildung wird eine Breite des quasi-endlosen Stranges durch Differenzbildung der Summe zweier bestimmter Abstände und einer Entfernung der beiden unterschiedlichen Standpunkte voneinander bestimmt, oder es wird eine Breite des quasi-endlosen Stranges durch Subtraktion zweier bestimmter Abstände von der Entfernung der beiden unterschiedlichen Standpunkte voneinander bestimmt, insbesondere wenn das Emittieren und das Empfangen im Wesentlichen in einem rechten Winkel zu einer Oberfläche des quasi-endlosen Stranges erfolgen.

So kann effizient die Breite des Stranges bestimmt und überwacht werden, um eventuelle Fehlerkorrekturmaßnahmen zu ergreifen. Beispielsweise wird so die Breite b bestimmt als b = d - x1 - x2, wobei x1 und x2 die zwei bestimmten Abstände bezeichnen und d die Entfernung der beiden unterschiedlichen Standpunkte voneinander bezeichnet. Beispielsweise kann auch b = d - (x1 + x2) berechnet werden.

Die Berechnung hat ein vorteilhaftes Verhalten im Hinblick auf Fehlerfortpflanzung.

Gemäß einer Weiterbildung wird eine Breite des quasi-endlosen Stranges durch Differenzbildung der Summe zweier bestimmter Abstände und einer Entfernung der beiden unterschiedlichen Standpunkte voneinander bestimmt, oder eine Breite des quasi-endlosen Stranges durch Subtraktion zweier bestimmter Abstände von der Entfernung der beiden unterschiedlichen Standpunkte voneinander bestimmt, wobei das Emittieren und das Empfangen im Wesentlichen in einem rechten Winkel zu einer Oberfläche des quasi-endlosen Stranges erfolgen, wobei zudem bei der Bestimmung mindestens eines der beiden Abstände eine trigonometrische Funktion eingesetzt wird, um den Effekt einer Winkelabweichung von der rechtwinkligen Messung zu korrigieren. Dadurch wird die Berechnung genauer.

In einem Beispiel wird ein Laufweg oder eine Laufzeit mit einem Kosinus eines Winkels multipliziert. Beispielsweise ist dies der Einfallswinkel bzw. die Abweichung des Einfallswinkels vom rechten Winkel. Es kann auch die Hälfte des Winkels zwischen einfallendem und austretendem Signal sein.

Durch die korrekte Berücksichtigung des Winkels wird insbesondere eine unter einem Winkel vorgenommene Messung genauer. Hierdurch werden sukzessive Berechnungen genauer. Beispielsweise wird so ein effektiver gemittelter Gesamtabstand der Emissions- und Empfangsvorrichtung vom Strang genauer bestimmt, und hierdurch kann sukzessive die Breite des Stranges genauer berechnet werden.

Gemäß einer Weiterbildung ist zwischen der Emissionsvorrichtung und dem quasi-endlosen Strang eine Wand angeordnet, wobei die Wand eine Aussparung (7) aufweist, durch welche eine Signalausbreitung ermöglicht wird. Eine solche Wand bietet Schutz, beispielsweise vor Temperatur. Die Aussparung ermöglicht eine Messung. Die Messung ist aufgrund der Aussparung besonders fokussiert.

Gemäß einer Weiterbildung ist die Aussparung derart dimensioniert, dass ein effektiver Öffnungswinkel für die Emissionsvorrichtung gebildet wird, der höchstens 80% des Emissionsöffnungswinkels der Emissionsvorrichtung beträgt. So entsteht durch die Aussparung ein effektiver Öffnungswinkel, der signifikant kleiner ist als der Emissionsöffnungswinkels der Emissionsvorrichtung. Dies ermöglicht eine noch besser fokussierte und im Ergebnis sehr genaue Messung.

Gemäß einer Weiterbildung beträgt der Abstand zwischen der Emissionsvorrichtung und der Wand mindestens 10 cm. Dies schützt vor Temperatur und ist sehr einfach zu warten und zu reinigen.

Gemäß einer Weiterbildung wird der quasi-endlose Strang in einem Stranggussverfahren erzeugt. Bei einem solchen Stranggussverfahren wird teures Rohmaterial beim hoher Temperatur und höchsten Energieaufwendungen verarbeitet.

Die Kostenersparnis durch den Einsatz der Erfindung sind daher bei Einsatz der Erfindung im Rahmen eines Stranggussverfahrens besonders hoch. Hierdurch können nämlich Fehler frühzeitig erkannt und ggf. korrigiert werden. Dadurch werden Material, Energie, Arbeitsaufwand und sonstige Ressourcen effizient eingespart.

Gemäß einer Weiterbildung wird die Emissionsvorrichtung und/oder die Empfangsvorrichtung in der Kühlzone angeordnet. Da erfindungsgemäß am Strang in der Kühlzone gemessen wird, wird durch die Anordnung der Emissionsvorrichtung und/oder der Empfangsvorrichtung in der Kühlzone ein effizienter Vorrichtungsaufbau und eine kurze Signalwegstrecke erreicht. Dadurch kann die Vorrichtung sehr präzise arbeiten.

Gemäß einer Weiterbildung umfasst die Emissionsvorrichtung und die Empfangsvorrichtung eine gemeinsam genutzte Vorrichtung, insbesondere einen gemeinsamen Radar-Transceiver. Hierdurch werden Kosten eingespart, da nur ein Gerät benötigt wird. Zudem kann besonders einfach im rechten Winkel am Strang gemessen werden. In vielen RADAR-Setups ist so auch nur eine einzelne Kalibrierung erforderlich.

Gemäß einer Weiterbildung kommt beim Stranggussverfahren eine Kokille zum Einsatz kommt, durch die der quasi-endlose Strang gebildet wird, wobei die Schritte S01 bis S03 unmittelbar der Kokille nachgeordnet durchgeführt werden.

Gemäß einer Weiterbildung ist die Emissionsvorrichtung und/oder die Empfangsvorrichtung durch eine Blende geschützt, die aus PTFE, welches zumindest bis zu einer Temperatur von 260°C stabil ist, und/oder Keramik, welche zumindest bis zu einer Temperatur von 1.400°C stabil ist, gebildet ist.

Die Blende schützt die jeweilige Vorrichtung effizient vor Temperatur und anderen Umwelteinflüssen.

Gemäß einer Weiterbildung ist die Emissionsvorrichtung und/oder die Empfangsvorrichtung durch eine erste Blende geschützt, welche insbesondere als Lochblende ausgestaltet ist, und ferner das Loch durch eine zweite Blende abgedeckt ist, wobei die zweite Blende aus PTFE gebildet ist. Dies kombiniert einen guten Schutz mit guten Emissions- bzw. Empfangscharakteristika der jeweiligen Vorrichtung.

Gemäß einer Weiterbildung umfasst die Emissionsvorrichtung und/oder die Empfangsvorrichtung eine Linsenkonstruktion. Dies dient beispielsweise einer Fokussierung der elektromagnetischen Wellen und trägt hierdurch zu einer präzisen Messung bei.

Gemäß einer Weiterbildung umfasst die Emissionsvorrichtung und/oder die Empfangsvorrichtung eine Hornantenne und/oder eine Phased-Array-Antenne. Hornantennen und phasengesteuerte Gruppenantennen haben für den Einsatz im Zusammenhang mit der vorliegenden Erfindung besonders geeignete Strahlungscharakteristika. Im Allgemeinen können verschiedene Richtfunkantennen im Zusammenhang mit der Erfindung zum Einsatz kommen.

Gemäß einer Weiterbildung wird die Erfindung im Dauerstrichmodus betrieben, insbesondere frequenzmoduliert und insbesondere als Dauerstrichradar. Dies ist für den vorgesehenen Zweck besonders gut geeignet und besonders präzise. Zudem ermöglicht es eine kontinuierliche Überwachung.

### Figurenliste

Die vorliegende Erfindung wird nachfolgend anhand der in den schematischen Figuren der Zeichnungen angegebenen Ausführungsbeispiele näher erläutert. Es zeigen dabei:
Fig. 1 eine Vorrichtung für die Durchführung eines Stranggussverfahrens (Stranggießanlage);
Fig. 2 eine Vorrichtung für die Durchführung eines Stranggussverfahrens (Stranggießanlage), die für das erfindungsgemäße Verfahren gemäß einer Ausführungsform vorgesehen ist, welche insbesondere dazu eingerichtet ist, eine Dicke eines quasiendlosen Stranges zu bestimmen;
Fig. 3 eine Vorrichtung für die Durchführung eines Stranggussverfahrens (Stranggießanlage), die für das erfindungsgemäße Verfahren gemäß einer Ausführungsform vorgesehen ist, welche insbesondere dazu eingerichtet ist, eine Dicke eines quasiendlosen Stranges zu bestimmen;
Fig. 4 eine Vorrichtung für die Durchführung eines Stranggussverfahrens (Stranggießanlage), die für das erfindungsgemäße Verfahren gemäß einer Ausführungsform vorgesehen ist, welche insbesondere dazu eingerichtet ist, eine Dicke eines quasiendlosen Stranges zu bestimmen;
Fig. 5 eine vereinfachte schematische Darstellung einer Vorrichtung für die Durchführung eines Stranggussverfahrens (Stranggießanlage), die für das erfindungsgemäße Verfahren gemäß einer Ausführungsform vorgesehen ist, welche insbesondere dazu eingerichtet ist, eine Breite eines quasiendlosen Stranges zu bestimmen.

### Figurenbeschreibungen

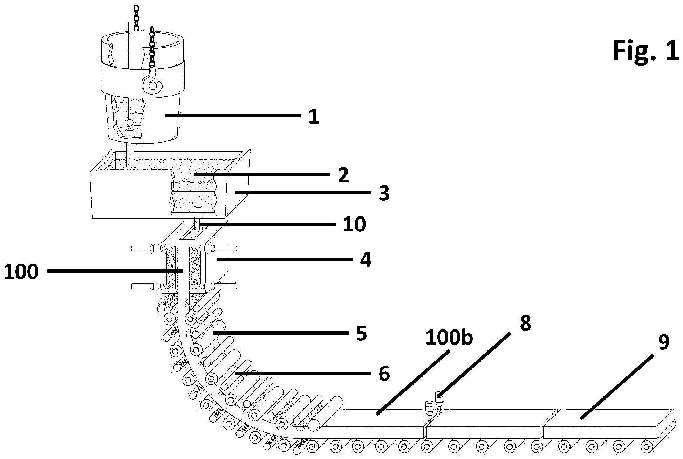

Eine Stranggießanlage arbeitet herkömmlicherweise wie in Fig. 1 dargestellt. Der Stranggießanlage wird flüssiger Stahl 2 oder eine Metallschmelze 2 in eine unten offene Gießform 4, die Kokille 4, gefüllt. Im Bereich der Kokille 4 findet eine Primärkühlung statt. Es fließt die noch flüssige Metallschmelze mit ca. 1.600°C in einen Kanal, der ebenso als Kokille bezeichnet wird, wo die Metallschmelze abgekühlt wird. Über die Kokillenwände wird Wärme abgeführt, so dass das Metall erstarrt und eine tragfähige Schale bildet. Das heißt, während des Abkühlvorgangs bildet sich äußerlich eine Kruste. Die Erstarrungstemperatur von z. B. Stahl liegt je nach Zusammensetzung bei ca. 1.150°C bis 1.500°C. Die so genannte Strangschale beinhaltet einen flüssigen Kern. Die erstarrte Strangschale wird kontinuierlich aus der Kokille gezogen und durch Rollen 5 gestützt weitergeleitet. Bei der primären Kühlstation wird herkömmlicherweise mit Hilfe von einer Wasserkühlung in den Kokillen ca. 12% der Energie des Metalls entzogen. Die Kokillenwände bestehen typischerweise aus beschichteten oder unbeschichteten Kupferplatten. An der Rückseite der Kupferplatten wird durch den Kontakt mit Kühlwasser gekühlt. Das Kühlwasser wird dabei durch die dafür zwischen Kokillenwand und Stützplatten vorgesehenen Kühlschlitzen oder Kühlspalten gepumpt. Die Durchflussrate des Kühlwassers ist hoch und so gewählt, dass eine Erwärmung um 6 bis 15°C erreicht wird. Die in der Kokille erreichte Wärmeabfuhr von ca. 2 Megawatt pro Quadratmeter ist hoch. Die Energie wird ungenutzt über den Wärmetauscher abgeführt und kann in dieser Form nicht einer Rückgewinnung zugeführt werden. Nach der ersten Station, der Kokille, folgt eine sekundäre Kühlung durch Sprühkühlung mit Wasser oder einem Luft-Wassergemisch. In der Sekundärkühlung wird dem Strang durch Spritzwasserkühlung 6, Strahlung und geschlossener Maschinenkühlung Wärme entzogen, bis eine Durcherstarrung erfolgt oder die Stabilität der Schale ohne Kühlung gewährleistet ist. Der erstarrte Metallstrang wird danach in Blöcke, den so genannten Brammen, Vorblöcke oder Knüppel oder Strangstücke geschnitten und weiterverarbeitet oder zwischengelagert. Der Energieinhalt dieser Blöcke oder Strangstücke entspricht immer noch ca. 50% des Energieinhalts des flüssigen Metalls.

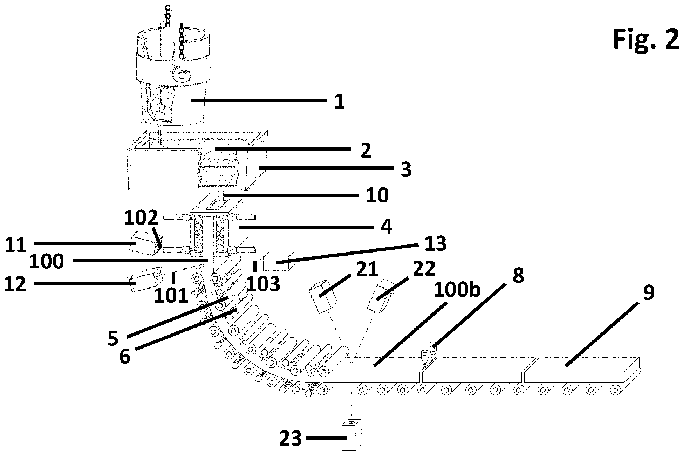

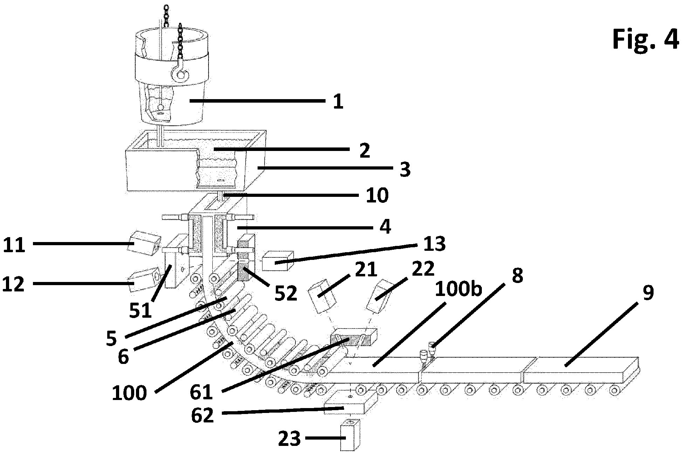

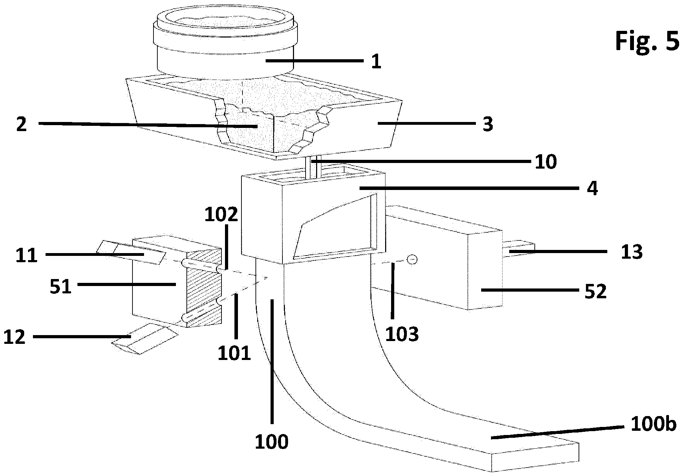

Die Figuren 1 - 5 zeigen Stranggießanlagen und werden im Folgenden - soweit möglich - gemeinsam beschrieben. Dabei sind die Vorrichtungen der Figuren 2 - 5 dazu eingerichtet, dass die vorliegende Erfindung zum Einsatz gebracht werden kann. Die Vorrichtungen der Figuren 2, 3 und 4 sind insbesondere dazu eingerichtet, dass die vorliegende Erfindung zur Bestimmung einer Dicke eines quasiendlosen Stranges zum Einsatz gebracht werden kann. Die Vorrichtung der Figur 5 ist insbesondere dazu eingerichtet, dass die vorliegende Erfindung zur Bestimmung einer Breite eines quasiendlosen Stranges zum Einsatz gebracht werden kann. Für zahlreiche Prozesse ist die Bestimmung einer Breite besonders relevant.

Die Pfanne 1 umfasst eine flüssige Metallschmelze 2, welche von dort in den Verteiler 3 fließt, und von dort über das Gießrohr 10 sukzessive in die Kokille 4, wodurch der quasi-endlose Strang 100 gebildet wird.

Dargestellt ist in allen Figuren ein vertikales Gießverfahren, die Erfindung kann aber auch bei anderen Gießverfahren wie beispielsweise einem horizontalen Gießverfahren zum Einsatz kommen.

Die Erzeugung und sukzessive Abkühlung des Stranges erfolgen beispielsweise wie weiter oben beschrieben. Führung und sukzessive Kühlung des Stranges erfolgen hier durch die Rollen/Walzen 5 und die Kühlvorrichtungen 6.

Der fertige Endlosstrang 100b wird beispielsweise durch eine Schneidvorrichtung 8 wie z.B. einen oder mehrere Schneidbrenner oder einen oder mehrere Plasmabrenner 8 zerteilt, beispielsweise in Brammen 9 oder Knüppel.

In der Figur 2 wird an der Vorrichtung das erfindungsgemäße Verfahren praktiziert. Insbesondere sind eine RADAR-Emissionsvorrichtung 11, eine RADAR-Empfangsvorrichtung 12 und ein RADAR-Transceiver 13 abgebildet, die dazu eingerichtet sind, bei einem erfindungsgemäßen Verfahren zum Einsatz zu kommen.

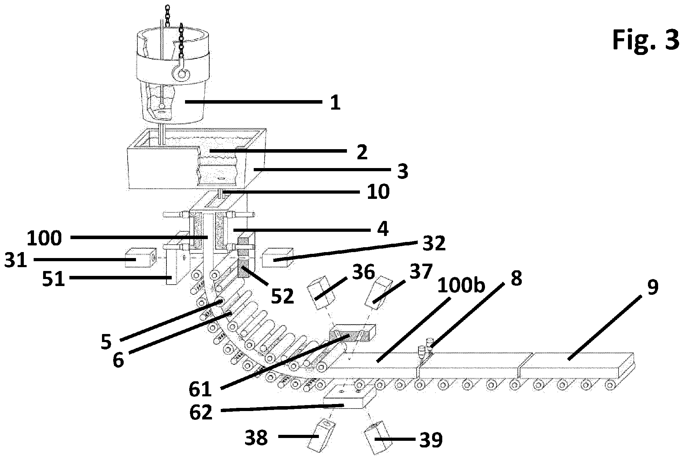

In diesem Beispiel kommen linksseitig eine RADAR-Emissionsvorrichtung 11 und eine hiervon getrennte RADAR-Empfangsvorrichtung 12 zum Einsatz. Rechtsseitig kommt in diesem Beispiel der RADAR-Transceiver 13 zum Einsatz. Bei dieser Anordnung handelt es sich jedoch lediglich um ein Beispiel. Sowohl links- als auch rechtsseitig kann - unabhängig voneinander - eine Wahl getroffen werden, ob ein Transceiver oder getrennte Emissions- und Empfangsvorrichtung zum Einsatz gebracht werden sollen. Sämtliche kombinatorische Wahlen (1. links: Transceiver, rechts: Transceiver; 2. links: Transceiver, rechts: Transmitter + Receiver; 3. links: Transmitter + Receiver, rechts: Transceiver; 1. links: Transmitter + Receiver, rechts: Transmitter + Receiver) sind mit der vorliegenden Erfindung kompatibel. Beispielsweise sind in der Figur 3 zwei RADAR-Transceiver 31 und 32 abgebildet.

Eine weitere, d.h. zusätzliche, Messung ist auch am Horizontalstrang möglich. In der Figur 2 sind hierzu eine RADAR-Emissionsvorrichtung 21, eine RADAR-Empfangsvorrichtung 22 sowie ein RADAR-Transceiver 23 abgebildet. Eine zusätzliche Messung hat zahlreiche Vorteile. Beispielsweise kann so am Horizontalstrang überprüft werden, ob ein zuvor im Rahmen einer ersten Messung am Vertikalstrang festgestellter Fehler beseitigt werden konnte. Auch ist das Material viel weiter abgekühlt und die Messung liefert daher Messwerte, die näher an den Messwerten des fertigen Produktes sind.

Bei dieser Anordnung einer RADAR-Emissionsvorrichtung 21, einer RADAR-Empfangsvorrichtung 22 sowie einem RADAR-Transceiver 23 in der Figur 2 handelt es sich jedoch ebenso lediglich um ein Beispiel. Sowohl ober- als auch unterseitig kann - unabhängig voneinander - eine Wahl getroffen werden, ob ein Transceiver oder getrennte Emissions- und Empfangsvorrichtung zum Einsatz gebracht werden sollen. Sämtliche kombinatorische Wahlen (1. oben: Transceiver, unten: Transceiver; 2. oben: Transceiver, unten: Transmitter + Receiver; 3. oben: Transmitter + Receiver, unten: Transceiver; 1. oben: Transmitter + Receiver, unten: Transmitter + Receiver) sind dabei möglich und auch mit einer Kombination mit der erfindungsgemäßen Lehre kompatibel. Beispielsweise sind in der Figur 3 zwei RADAR-Emissionsvorrichtungen 36 und 38 sowie zwei RADAR-Empfangsvorrichtungen 37 und 39 abgebildet.

In sämtlichen Figuren ist die Positionierung von assoziierten Emissionsvorrichtungen und Empfangsvorrichtungen lediglich beispielhaft. Beispielsweise kann sich die RADAR-Emissionsvorrichtung 11 in der Figur 2 auch dort befinden, wo die RADAR-Empfangsvorrichtung 12 dargestellt ist, während sich sogleich die RADAR-Empfangsvorrichtung 12 dort befindet, wo die RADAR-Emissionsvorrichtung 11 dargestellt ist.

Die Figur 3 offenbart zudem Wände bzw. Abdeckungen 51, 52, 61, 62 mit Aussparungen, welche eine Signaltransmission ermöglichen. Die Aussparungen können auch mit einem geeigneten Material erfüllt sein. Die Vorteile der Wände bzw. Abdeckungen ergeben sich aus der Beschreibung der Erfindung und ihren Weiterbildungen.

Die Vorrichtung der Figur 5 ist insbesondere dazu eingerichtet, dass die vorliegende Erfindung zur Bestimmung einer Breite eines quasiendlosen Stranges zum Einsatz gebracht werden kann. Dies schlägt sich in der Figur 5 insbesondere in der Position und Ausrichtung der RADAR-Emissionsvorrichtung 11, der RADAR-Empfangsvorrichtung 12 und des RADAR-Transceivers 13 (und ggf. der Wände 51, 52). Die Ausrichtung der RADAR-Signale 101, 102, 103 ist ebenfalls entsprechend angepasst. Diese fallen in der Figur 5 auf die Seite des quasiendlosen Stranges 100 ein bzw. gehen hiervon aus.

Ebenfalls in der Figur 5 ist die Positionierung von assoziierten Emissionsvorrichtungen und Empfangsvorrichtungen lediglich beispielhaft. Beispielsweise kann sich die RADAR-Emissionsvorrichtung 11 in der Figur 5 auch dort befinden, wo die RADAR-Empfangsvorrichtung 12 dargestellt ist, während sich sogleich die RADAR-Empfangsvorrichtung 12 dort befindet, wo die RADAR-Emissionsvorrichtung 11 dargestellt ist.

In diesem Beispiel der Figur 5 kommen linksseitig eine RADAR-Emissionsvorrichtung 11 und eine hiervon getrennte RADAR-Empfangsvorrichtung 12 zum Einsatz. Rechtsseitig kommt in diesem Beispiel der RADAR-Transceiver 13 zum Einsatz. Bei dieser Anordnung handelt es sich jedoch lediglich um ein Beispiel. Sowohl links- als auch rechtsseitig kann - unabhängig voneinander - eine Wahl getroffen werden, ob ein Transceiver oder getrennte Emissions- und Empfangsvorrichtung zum Einsatz gebracht werden sollen. Sämtliche kombinatorische Wahlen (1. links: Transceiver, rechts: Transceiver; 2. links: Transceiver, rechts: Transmitter + Receiver; 3. links: Transmitter + Receiver, rechts: Transceiver; 1. links: Transmitter + Receiver, rechts: Transmitter + Receiver) sind mit der vorliegenden Erfindung kompatibel. Der Fachmann erkennt, dass sich die Begriffe "links" und "rechts", welche sich auf die jeweilige Figur beziehen, hierbei im Rahmen der Figur 5 anders definieren als im Rahmen der Figuren 1 - 4.

Für zahlreiche Prozesse ist die Bestimmung einer Breite besonders relevant. Der Übersichtlichkeit halber ist Figur 5 vereinfacht dargestellt.

### Bezugszeichenliste

- 1: Pfanne
- 2: Schmelze
- 3: Verteiler
- 4: Kokille
- 5: Rolle/Walze
- 6: Kühlvorrichtung
- 8: Schneidevorrichtung
- 9: Bramme
- 10: Gießrohr
- 11: RADAR-Emissionsvorrichtung
- 12: RADAR-Empfangsvorrichtung
- 13: RADAR-Transceiver
- 21: RADAR-Emissionsvorrichtung
- 22: RADAR-Empfangsvorrichtung
- 23: RADAR-Transceiver
- 31: RADAR-Transceiver
- 32: RADAR-Transceiver
- 36: RADAR-Emissionsvorrichtung
- 37: RADAR-Empfangsvorrichtung
- 38: RADAR-Emissionsvorrichtung
- 39: RADAR-Empfangsvorrichtung
- 51: Wand/Abschirmung
- 52: Wand/Abschirmung
- 61: Wand/Abschirmung
- 62: Wand/Abschirmung
- 100, 100b: quasi-endloser Strang
- 101: zweites RADAR-Signal (Sekundärsignal)
- 102: erstes RADAR-Signal (Primärsignal)
- 103: erstes RADAR-Signal (Primärsignal) und zweites RADAR-Signal (Sekundärsignal), räumlich überlappend

### Weitere Offenbarungen

1. Verfahren nach einem der Ansprüche, wobei beim Stranggussverfahren eine Kokille zum Einsatz kommt, durch die der quasi-endlose Strang gebildet wird, wobei die Schritte S01 bis S03 unmittelbar der Kokille nachgeordnet durchgeführt werden.
2. Verfahren nach einem der Ansprüche, wobei die Emissionsvorrichtung und/oder die Empfangsvorrichtung durch eine Blende geschützt ist, die aus PTFE, welches zumindest bis zu einer Temperatur von 260°C stabil ist, und/oder Keramik, welche zumindest bis zu einer Temperatur von 1.400°C stabil ist, gebildet ist.
3. Verfahren nach einem der Ansprüche, wobei die Emissionsvorrichtung und/oder die Empfangsvorrichtung durch eine erste Blende geschützt ist, welche insbesondere als Lochblende ausgestaltet ist, und ferner das Loch durch eine zweite Blende abgedeckt ist, wobei die zweite Blende aus PTFE gebildet ist.
4. Verfahren nach einem der Ansprüche, wobei die Emissionsvorrichtung und/oder die Empfangsvorrichtung eine Linsenkonstruktion umfassen.

## Patentansprüche

1. **Verfahren** zum berührungslosen Bestimmen von zumindest einer Eigenschaft eines zumindest teilweise aufgeschmolzenen quasi-endlosen Stranges (100, 100b) während eines Gießvorganges des quasi-endlosen Stranges (100, 100b), welcher in einer Kühlzone (K) abkühlt, wobei eine sukzessive Aushärtung des quasi-endlosen Stranges (100, 100b) ermöglicht wird, umfassend zumindest die folgenden Schritte:
- Emittieren (S01) eines ersten Signales (102), insbesondere ersten Radarsignals (102), in der Form von Strahlung durch eine Emissionsvorrichtung (11, 13, 31, 32), insbesondere einer Radar-Emissionsvorrichtung (11, 13, 31, 32),
- Erzeugen (S02a) eines zweiten Signales (101), insbesondere zweiten Radarsignals (101), zumindest teilweise durch ein Wechselwirken (S02b) des ersten Signales (102) mit einem Bereich des quasi-endlosen Stranges (100, 100b),
- Empfangen (S03) des zweiten Signales (101) durch eine Empfangsvorrichtung (12, 13, 31, 32), insbesondere durch eine Empfangsvorrichtung (12, 13, 31, 32) für Radarsignale,
- Bestimmen (S04) mindestens einer Eigenschaft des quasi-endlosen Stranges (100, 100b) auf Basis des zweiten Signals (101),
**dadurch gekennzeichnet, dass** mindestens der Schritt des Wechselwirkens (S02b) in der Kühlzone (K) erfolgt.

2. Verfahren nach Anspruch 1, wobei das Verfahren ferner umfasst:
- einen Schritt eines Handlings (S05) eines Fehlers oder einer Anomalität im quasi-endlosen Strang (1), welcher auf Basis der bestimmten Eigenschaften oder hieraus ermittelter Sekundärgrößen festgestellt wird, insbesondere durch einen Abbruch des Gießverfahrens oder eine Erzeugung eines Protokolls oder einer Anweisung, welche dazu geeignet ist, den vom Fehler betroffenen Bereich des quasi-endlosen Stranges (9) nachträglich bei der weiteren Verarbeitung zu entfernen, weiterhin insbesondere durch Herausschneiden des vom Fehler betroffenen Bereichs bei einem sukzessiven Zerteilen des quasi-endlosen Stranges in Brammen.

3. Verfahren nach Anspruch 1 oder 2, wobei die zumindest eine bestimmte Eigenschaft des quasi-endlosen Stranges ausgewählt ist aus der Gruppe bestehend aus Abstand, Breite, Dicke, Dichte, Temperatur und Homogenität.

4. Verfahren nach einem der Ansprüche 1 bis 3, wobei die Schritte S01 bis S03 von zwei unterschiedlichen Standpunkten, insbesondere von zwei im Wesentlichen gegenüberliegend angeordneten Standorten in Bezug auf den quasi-endlosen Strang durchgeführt werden.

5. Verfahren nach Anspruch 4, wobei gemäß dem Schritt S04 eine Breite des quasi-endlosen Stranges durch Differenzbildung der Summe zweier bestimmter Abstände und einer Entfernung der beiden unterschiedlichen Standpunkte voneinander bestimmt wird, oder wobei gemäß dem Schritt S04 eine Breite des quasi-endlosen Stranges durch Subtraktion zweier bestimmter Abstände von der Entfernung der beiden unterschiedlichen Standpunkte voneinander bestimmt wird, insbesondere wenn das Emittieren (S01) und das Empfangen (S02) im Wesentlichen in einem rechten Winkel zu einer Oberfläche des quasi-endlosen Stranges erfolgen.

6. Verfahren nach Anspruch 4, wobei gemäß dem Schritt S04 eine Breite des quasi-endlosen Stranges durch Differenzbildung der Summe zweier bestimmter Abstände und einer Entfernung der beiden unterschiedlichen Standpunkte voneinander bestimmt wird, oder wobei gemäß dem Schritt S04 eine Breite des quasi-endlosen Stranges durch Subtraktion zweier bestimmter Abstände von der Entfernung der beiden unterschiedlichen Standpunkte voneinander bestimmt wird, wobei das Emittieren (S01) und das Empfangen (S02) im Wesentlichen in einem rechten Winkel zu einer Oberfläche des quasi-endlosen Stranges erfolgen, wobei zudem bei der Bestimmung (S04) mindestens eines der beiden Abstände eine trigonometrische Funktion eingesetzt wird, um den Effekt einer Winkelabweichung von der rechtwinkligen Messung zu korrigieren.

7. Verfahren nach einem der Ansprüche 1 bis 6, wobei zwischen der Emissionsvorrichtung und dem quasi-endlosen Strang eine Wand (6) angeordnet ist, wobei die Wand eine Aussparung (7) aufweist, durch welche eine Signalausbreitung ermöglicht wird.

8. Verfahren nach Anspruch 7, wobei die Aussparung derart dimensioniert ist, dass ein effektiver Öffnungswinkel für die Emissionsvorrichtung gebildet wird, der höchstens 80% des Emissionsöffnungswinkels der Emissionsvorrichtung beträgt.

9. Verfahren nach Anspruch 7 oder 8, wobei der Abstand zwischen der Emissionsvorrichtung und der Wand mindestens 10 cm beträgt.

10. Verfahren nach einem der Ansprüche 1 bis 9, wobei der quasi-endlose Strang in einem Stranggussverfahren erzeugt wird.

11. Verfahren nach einem der Ansprüche 1 bis 10, wobei der Emissionsvorrichtung und/oder die Empfangsvorrichtung in der Kühlzone angeordnet sind.

12. Verfahren nach einem der Ansprüche 1 bis 11, wobei die Emissionsvorrichtung und die Empfangsvorrichtung eine gemeinsam genutzte Vorrichtung, insbesondere einen gemeinsamen Radar-Transceiver, umfassen.

13. Verfahren nach einem der Ansprüche 10 bis 12, wobei die Emissionsvorrichtung und/oder die Empfangsvorrichtung eine Hornantenne und/oder eine Phased-Array-Antenne umfassen.

14. **Vorrichtung** zum Gießen eines Materials, insbesondere eines Metalls, zu einem quasi-endlosen Strang (100, 100b) im Rahmen eines Stranggussverfahrens und zum berührungslosen Bestimmen von zumindest einer Eigenschaft des zumindest teilweise aufgeschmolzenen quasi-endlosen Stranges (100, 100b) während des Gießens des quasi-endlosen Stranges (100, 100b), umfassend:
- eine Kokille (4), welche dazu geeignet ist, den quasi-endlosen Strang (100, 100b) zu formen,
- eine Kühlzone (K), in welcher der quasi-endlose Strang (100, 100b) abkühlt, wobei eine sukzessive Aushärtung des quasi-endlosen Stranges (100, 100b) ermöglicht wird,
- eine Emissionsvorrichtung (11, 13, 31, 32), insbesondere einen Radarsender (11, 13, 31, 32), welche dazu eingerichtet ist, ein erstes Signal (102, 103) in der Form von Strahlung zu emittieren, insbesondere als erstes Radarsignal (102, 103),
- eine Empfangsvorrichtung (12, 13, 31, 32), insbesondere einen Radarempfänger (12, 13, 31, 32), welche dazu eingerichtet ist, ein zweites Signal (101, 103) zu empfangen, inbesondere ein zweites Radarsignal (101, 103),
wobei das zweite Signal (101, 103) zumindest teilweise durch ein Wechselwirken des ersten Signales (102, 103) mit einem Bereich des quasi-endlosen Stranges (100, 100b) in der Kühlzone (K) erzeugt wird,
- eine Datenverarbeitungseinheit, welche dazu eingerichtet ist, mindestens eine Eigenschaft des quasi-endlosen Stranges (100, 100b) auf Basis des zweiten Signals (101, 103) zu bestimmen.

15. **Verwendung** einer Emissionsvorrichtung (11, 13, 31, 32) und einer Empfangsvorrichtung (12, 13, 31, 32), insbesondere für Radarsignale (101, 102, 103), zum berührungslosen Bestimmen von zumindest einer Eigenschaft eines zumindest teilweise aufgeschmolzenen quasi-endlosen Stranges (100, 100b) während eines Gießvorganges des quasi-endlosen Stranges (100, 100b), welcher in einer Kühlzone (K) abkühlt, wobei eine sukzessive Aushärtung des quasi-endlosen Stranges (100, 100b) ermöglicht wird,
wobei die Emissionsvorrichtung (11, 13, 31, 32) und die Empfangsvorrichtung (12, 13, 31, 32) derart angeordnet sind, dass sie die zumindest eine Eigenschaft des quasi-endlosen Stranges (100, 100b) in der Kühlzone (K) bestimmen.
